# EUROPEAN PATENT APPLICATION

(11) **EP 4 675 736 A1**
(43) Date of publication of application: **07.01.2026**
(21) Application number: 24763766.3
(22) Date of filing: 22.02.2024
(51) Int. Cl.: H01M 10/052, H01M 4/13, H01M 4/62, H01M 4/139, H01M 10/0562, H01M 10/0568, H01M 10/0569, H01M 10/0585

(54) **ALL-SOLID-STATE BATTERY AND METHOD OF MANUFACTURING ALL-SOLID-STATE BATTERY**

(30) Priority: 28.02.2023 JP 2023029709
(71) Applicant: Sanoh Industrial Co., Ltd., Shibuya-ku Tokyo 150-0002 (JP)
(72) Inventor: MAEDA, Yu, Koga-shi, Ibaraki 306-0041 (JP); SAKAGUCHI, Yoshiki, Koga-shi, Ibaraki 306-0041 (JP)
(74) Representative: Bryn Aarflot AS
(86) International application number: PCT/JP2024/006451
(87) International publication number: WO 2024/181285

(57) **Abstract**

An all-solid-state battery having an improved contact state between an electrode layer and a solid electrolytic layer and achieving charging/discharging without pressurization during use of the all-solid-state battery, and a method of manufacturing the same are provided. The means for this adopts the all-solid-state battery including a current collector, an electrode layer provided on the current collector, and a solid electrolyte layer stacked on and being in contact with the electrode layer, in which a plurality of voids are formed at a contact interface between the electrode layer and the solid electrolyte layer, and in which the voids contain electrolytic solution.

## Description

### TECHNICAL FIELD

The present invention relates to an all-solid-state battery and a method of manufacturing the all-solid-state battery, and particularly to an all-solid-state battery having an improved contact state between an electrode layer and a solid electrolytic layer and a method of manufacturing the all-solid-state battery.

### BACKGROUND ART

Secondary batteries such as lithium ion secondary batteries capable of achieving relatively high power and high capacity have been used for power supplies each mounted in a vehicle or the like using electricity as a driving source and power supplies each mounted in an electrical product or the like such as a personal computer or a mobile terminal. Among these secondary batteries, such a lithium ion secondary battery is particularly light in weight and has a high energy density, and is preferable as a high power supply for driving a vehicle such as an electric vehicle (EV), a plug-in hybrid vehicle (PHV) and a hybrid vehicle (HV), and the increase in demand for this will be expected in the future.

In addition, in recent years, as one form of the secondary battery, a battery in a form using a solid electrolyte such as a powder-like electrolyte, a pellet-like electrolyte, a plate-like electrolyte molded by sintering or the like, instead of a liquid electrolyte (electrolytic solution), the battery being so-called all-solid-state battery, has been variously researched and developed for the practical use.

Since the all-solid-state battery does not use the liquid electrolyte (particularly non-aqueous electrolytic solution) to ensure the contact between electrodes, a stacked electrode body having a stacked structure made of a positive electrode layer, a negative electrode layer, and a solid electrolytic layer can be easily structured without performing a complicated processing in a case of handling an organic solvent such as the non-aqueous electrolytic solution.

In addition, since no electrolytic solution is used, the structure of the electrode body is simple, this can also contribute to improvement in the battery capacity per battery unit volume. Further, since no electrolytic solution is used, safety is high.

Incidentally, the all-solid-state battery includes the solid electrolytic layer as described above, and all constituent materials of the battery are solid, and therefore, contact and bonding between the constituent materials may be insufficient. Techniques for improving the contact and bonding have been enthusiastically studied. For example, Patent Document 1 discloses a technique for improving a bonding strength between a current collector layer and an active material layer formed in contact therewith since the bonding strength tends to be insufficient.

### RELATED ART DOCUMENT

### PATENT DOCUMENT

[Patent Document 1] Japanese Patent No. 6992802

### SUMMARY OF THE INVENTION

### PROBLEMS TO BE SOLVED BY THE INVENTION

In addition, the solid electrolytic layer and the electrode layer in the all-solid-state battery are manufactured by separately manufacturing these members and then stacking the obtained plate-like solid electrolyte and electrode to be in contact with each other. This manufacturing method is a general method of manufacturing the all-solid-state battery.

However, the all-solid-state battery obtained as described above cannot be sufficiently charged and discharged in its stacked state in many cases. Therefore, during use, the all-solid-state battery manufactured as described above is usually pressurized in a stacking direction or heated in addition to pressurization in order to improve the contact state between the solid electrolytic layer and the electrode layer. By the pressurization and the heating, the contact state between the members is improved. However, in this case, the all-solid-state battery must be charged and discharged while holding the state.

Therefore, conventionally-known all-solid-state batteries may not be sufficiently charged and discharged depending on conditions during use. A special configuration (such as a member for appropriately pressurizing the all-solid-state battery, pressurization means therefor, and a housing (package) for housing a rechargeable battery, and the like) is necessary for holding the pressurized state of the all-solid-state battery.

An objective of the present invention is to provide an all-solid-state battery having an improved contact state between a solid electrolytic layer and an electrode layer and a method of manufacturing the all-solid-state battery.

### MEANS FOR SOLVING THE PROBLEMS

An all-solid-state battery in the present embodiment includes a current collector, an electrode layer provided on the current collector, and a solid electrolytic layer stacked on and being in contact with the electrode layer. A plurality of voids are formed at a contact interface between the electrode layer and the solid electrolytic layer, and the voids contain electrolytic solution.

A method of manufacturing an all-solid-state battery according to the present embodiment includes a step of immersing an electrode plate into electrolytic solution, and a step of stacking the electrode plate immersed in the electrolytic solution with a plate-like solid electrolyte and a current collector.

### EFFECTS OF THE INVENTION

According to an all-solid-state battery and a method of manufacturing the all-solid-state battery in the present embodiment, an all-solid-state battery that can be efficiently charged and discharged by improving a contact state between a solid electrolytic layer and an electrode layer can be provided.

### BRIEF DESCRIPTIONS OF THE DRAWINGS

[FIG. 1] is a diagram illustrating a schematic configuration of an all-solid-state battery according to the present embodiment.
[FIG. 2] is a schematic explanatory diagram illustrating a contact interface between a negative electrode layer and a solid electrolytic layer in the all-solid-state battery illustrated in FIG. 1 so as to be enlarged.
[FIG. 3] is a diagram illustrating a schematic configuration and a circuit diagram for describing a combined resistance.
[FIG. 4] is a diagram illustrating a result of an examination example of an all-solid-state battery obtained in Working Example 1.

### DETAILED DESCRIPTION OF PREFERRED EMBODIMENTS

An embodiment will be described in detail below with reference to examples and drawings. Note that components having the same function are denoted with the same or similar reference symbols throughout all the drawings for describing the embodiments, and the repetitive description thereof will be omitted.

### [All-Solid-State Battery]

As features of an all-solid-state battery according to one embodiment of the present invention, a void is formed at a contact interface between an electrode layer and a solid electrolytic layer as described above, and the void contains electrolytic solution. The features will be described in detail below with reference to the drawings.

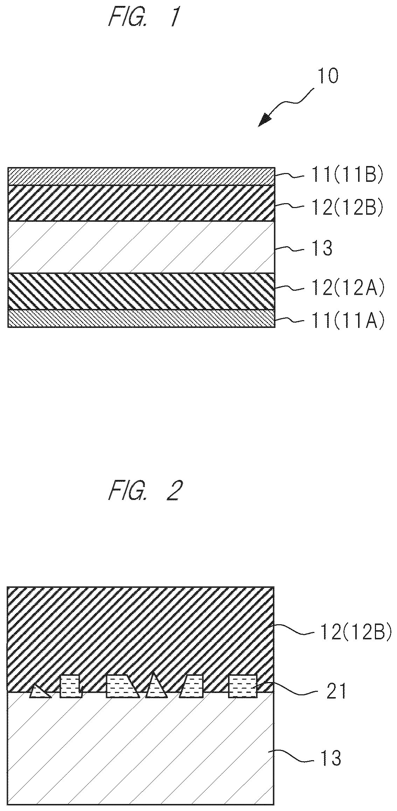

An example of the all-solid-state battery according to the present embodiment is an all-solid-state battery 10 including: a current collector 11 (a positive electrode current collector 11A, a negative electrode current collector 11B); an electrode layer 12 (a positive electrode layer 12A, a negative electrode layer 12B) provided on the current collector; and a solid electrolytic layer 13 stacked on and being in contact with the electrode layer 12, so that the positive electrode current collector 11A, the positive electrode layer 12A, the solid electrolytic layer 13, the negative electrode layer 12B, and the negative electrode current collector 11B are stacked in this order, as illustrated in FIG. 1.

In the following description, note that the all-solid-state lithium ion secondary battery is exemplified as the objective to which the technique disclosed herein is applied. However, the following description is not limited thereto. The all-solid-state battery described herein may be of a type using other metal ion as a charge carrier, such as sodium ion secondary battery and magnesium ion secondary battery.

### <Positive Electrode Current Collector>

For the positive electrode current collector 11A, a material used as a positive electrode current collector of such a battery type can be used without any particular limitation. Typically, a metallic positive electrode current collector having favorable conductivity is preferable, and is made of a metal material such as aluminum, nickel, titanium, stainless steel, copper, and such a metal coated with carbon coat (primer coated foil). Particularly, a current collector having a wide potential window is preferable because of providing a high capacity by charging/discharging in a wide voltage range. As a material of such a current collector, stainless steel (such as stainless steel foil) is preferable. The stainless steel is of a ferrite type, a martensite type, an austenite type or the like, depending on its structure. However, the type is not particularly limited. Although not particularly limited, a thickness of the positive electrode current collector 11A is preferably about 5 µm to 50 µm, more preferably about 8 µm to 30 µm, because of balance between a capacity density of the battery and a strength of the current collector.

### <Negative Electrode Current Collector>

For the negative electrode current collector 11B, a material used as a negative electrode current collector of such a battery type can be used without any particular limitation. Typically, a metallic negative electrode current collector having favorable conductivity is preferable, and, for example, copper (such as copper foil), an alloy mainly containing copper or the like can be used. Although not particularly limited, a thickness of the negative electrode current collector 11B is preferably about 5 µm to 50 µm, more preferably about 8 µm to 30 µm, because of balance between the capacity density of the battery and the strength of the current collector.

### <Positive Electrode Layer>

The positive electrode layer 12A used in the present embodiment is a positive electrode layer containing a positive electrode active material. The positive electrode active material described herein means a material relating to occlusion and release of the charge carrier (such as the lithium ion in the lithium ion secondary battery) on the positive electrode side.

The positive electrode active material used herein is contained as particles, and its average particle diameter (D50) based on a laser diffraction method is, for example, preferably about 0.5 µm to 20 µm, more preferably about 1 µm to 10 µm.

The positive electrode layer 12A can contain a conductive aid, a binder, a solid electrolyte or others in addition to the positive electrode active material. The positive electrode layer 12A can further contain various optional components as similar to those of the positive electrode layer of such a battery type of the related art.

Note that a thickness of the positive electrode layer 12A is, for example, preferably in a range of 10 µm to 500 µm although not particularly limited.

### <Negative Electrode Layer>

The negative electrode layer 12B used in the present embodiment is a negative electrode layer containing a negative electrode active material. The negative electrode active material described herein means a material relating to occlusion and release of the charge carrier (such as the lithium ion in the lithium ion secondary battery) on the negative electrode side.

The negative electrode layer 12B can contain a binder, a solid electrolyte or others in addition to the negative electrode active material. The negative electrode layer 12B can further contain various optional components as similar to those of the negative electrode layer of such a battery type of the related art.

Note that a thickness of the negative electrode layer 12B is, for example, preferably in a range of 10 µm to 500 µm although not particularly limited.

### <Solid Electrolytic Layer>

The solid electrolytic layer 13 used in the present embodiment can be made of a publicly-known solid electrolytic layer used in the all-solid-state battery, and can contain various solid electrolytes as similar to those of the related art without any particular limitation.

This solid electrolytic layer 13 is configured to be formed between and be in contact with the positive electrode layer 12A and the negative electrode layer 12B as illustrated in FIG. 1 so that the charge carrier such as the lithium ion is movable therebetween. This solid electrolytic layer 13 also plays a role of a separator, and prevents the short-circuit between the positive electrode layer 12A and the negative electrode layer 12B while transmitting the lithium ion.

In this case, as a material for forming the solid electrolytic layer 13, a material of the same type as that of the sold electrolytes described in the positive electrode layer 12A and the negative electrode layer 12B can be preferably used. Therefore, the material of these solid electrolytes will be described later.

And, in the present embodiment, the void is formed between the solid electrolytic layer and the electrode layer. For example, FIG. 2 illustrates the stacked structure made of the positive electrode layer 12A, the solid electrolytic layer 13, and the negative electrode layer 12B, and shows an example in a case where a plurality of voids are formed at a contact interface between the solid electrolytic layer 13 and the negative electrode layer 12B.

This is because each member of an all-solid-state battery entirely made of a solid material is generally formed first, and then, the members are stacked, and therefore, a contact surface of each member may be not flattened. Particularly, a surface of an electrode layer may be not flattened in many cases since a powder-like electrode active material is used and sintered. In this case, a contact state between the members caused by simply stacking the members is insufficient, and the simple stacking technique cannot ensure a contact state achieving the sufficient charging/discharging.

And, FIG. 2 illustrates a configuration in which the plurality of voids formed between the solid electrolytic layer 13 and the negative electrode layer 12B contain electrolytic solution 21. It has been confirmed that this configuration can improve the contact state between the members and achieves the charging/discharging without the pressurization or the like during use (during the charging/discharging). These voids are preferably filled with the electrolytic solution 21.

In the above description, note that the contact interface between the solid electrolytic layer 13 and the negative electrode layer 12B is exemplified. However, if there are similarly a plurality of voids at a contact interface between the solid electrolytic layer 13 and the positive electrode layer 12A, the voids may contain the electrolytic solution. That is, the voids existing only on the negative electrode layer side, only on the positive electrode layer side, or on both the negative electrode layer side and the positive electrode layer side may contain the electrolytic solution.

### <Electrolytic Solution>

The electrolytic solution 21 used herein may be electrolytic solution to be used in a rechargeable battery, and is not particularly limited. This electrolytic solution is obtained by dissolving an electrolyte in a solvent (single solvent or mixed solvent). At this time, the electrolyte may be adjusted to have a concentration of about 0.1 M to 5 M (preferably about 1 M to 3.3 M).

Examples of the solvent used herein are ethylene carbonate (EC), diethyl carbonate (DEC), dimethyl carbonate (DMC), ethyl methyl carbonate (EMC), propylene carbonate (PC) and the like. Examples of the preferable mixed solvent are, along with the use of such solvent as described above, EC : DEC (1 : 1 v/v%), EC : DEC (1 : 1 wt/wt%), EC : DEC (1 : 2 v/v%), EC : DEC (3 : 7 v/v%), EC : DMC (1 : 1 v/v%), EC : DMC (1 : 1 wt/wt%), EC : DMC (1 : 2 v/v%), EC : DMC (3 : 7 v/v%), EC : EMC (1 : 1 v/v%), EC : EMC (1 : 2 v/v%), EC : EMC (1 : 2 wt/wt%), EC : EMC (3 : 7 v/v%), EC : PC (1 : 1 v/v%), PC : DMC (1 : 1 v/v%), PC : EMC (1 : 1 v/v%), EC : DEC : DMC (1 : 1 : 1 v/v%), EC : DMC : EMC (1 : 1 : 1 v/v%), PC : EC : EMC (1 : 1 : 1 v/v%) and the like.

Examples of the electrolyte used herein are lithium hexafluorophosphate (LiPF₆), lithium tetrafluoroborate (LiBF₄), lithium perchlorate (LiClO₄), lithium trifluoromethanesulfonate (LiTFS), lithium bis(trifluoromethanesulfonyl)imide (LiTFSI), lithium bis(fluorosulfonyl)imide (LiFSI), lithium bis(perfluoroethylsulfonyl)imide (LiBETI), lithium bis(oxalate) borate (LiBOB), lithium tris(pentafluoroethyl)trifluorophosphate (LiFAP), LiC(SO₂CF₃)₃ and the like.

### [Action of Electrolytic Solution]

The configuration in the present embodiment has been described above. An action in the case of this configuration will be described in detail below.

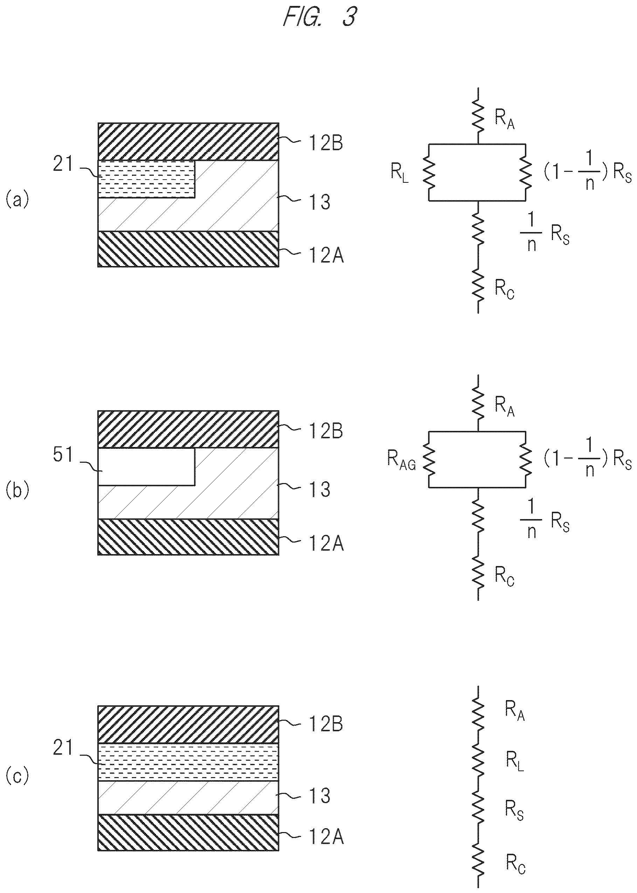

FIG. 3 is a diagram illustrating a schematic configuration and a circuit diagram for describing a difference in a combined resistance depending on the contact state between the negative electrode layer 12B and the solid electrolytic layer 13 in an all-solid-state battery and a semi-solid-state battery.

In FIG. 3, FIG. 3(a) and FIG. 3(b) respectively illustrate examples in the case where the positive electrode layer 12A, the solid electrolytic layer 13, and the negative electrode layer 12B are stacked so that the void is formed at the contact interface between the solid electrolytic layer 13 and the negative electrode layer 12B. And, FIG. 3(a) illustrates an example in which the void contains the electrolytic solution 21, and FIG. 3(b) illustrates an example in which the void does not contain the electrolytic solution 21 and is a void 51.

In addition, FIG. 3(c) illustrates an example showing a configuration of the semi-solid-state battery in which the solid electrolytic layer 13 and the negative electrode layer 12B are not in directly contact with each other and contain the electrolytic solution 21 therebetween. On the right side of these configurations, FIG. 3 illustrates a circuit diagram relating to the combined resistance in each of the configurations, and these contents will be also described below.

FIG. 3(a) is a diagram for describing the combined resistance of the all-solid-state battery having the configuration according to the present embodiment. Here, "R_{A}" represents an internal resistance of the negative electrode layer 12B, "R_{L}" represents an internal resistance of the electrolytic solution 21, "R_{S}" represents an internal resistance of the solid electrolyte layer 13, "n" represents a (optional) correction factor based on distance, and "R_{C}" represents an internal resistance of the positive electrode layer 12A. Here, R_{S} can be described to be divided into a resistance "(1 - 1/n)R_{S}" in a vicinity of the contact interface between the negative electrode layer 12B and the solid electrolytic layer 13 including the void formed therebetween, and a resistance "(1/n)R_{S}" in a main body of the solid electrolytic layer 13.

Here, a value of the combined resistance of R_{L} and (1 - 1/n)R_{S} is, because of being connected in parallel, always smaller than these two values in this parallel portion.

FIG. 3(b) is a diagram illustrating the combined resistance of the all-solid-state battery having the configuration in which the void existing at the contact interface between the solid electrolytic layer 13 and the negative electrode layer 12B does not contain the electrolytic solution and is the void 51.

In FIG. 3(b), the void illustrated in FIG. 3(a) does not contain the electrolytic solution 21 and is the void 51. Therefore, the combined resistance in this configuration is the same as that in FIG. 3(a) except that R_{L} in FIG. 3(a) is replaced with "R_{AG}".

In this case, although the resistance R_{AG} of the void 51 is ∞ (infinity) and ignorable, the contact area between the negative electrode layer 12B and the solid electrolytic layer 13 becomes very small. Accordingly, the resistance (1 - 1/n)R_{S} in the vicinity of the contact interface is converted into "(1 - 1/n + m)R_{S}", and therefore, the combined resistance becomes very large (note that "m" is a correction term). In this case, note that it has been confirmed in a comparison example described later that the charging/discharging cannot be sufficiently performed due to this increase in the combined resistance.

FIG. 3(c) is a diagram illustrating the combined resistance in the configuration of not the all-solid-state battery but the semi-solid-state battery. In the case of this configuration, the resistors are connected in series, and the combined resistance of the resistors can be calculated from the sum of their respective resistances. At this time, the combined resistance is larger than that in the configuration of the all-solid-state battery according to the present embodiment illustrated in FIG. 3(a).

From the above, it can be understood that the all-solid-state battery in the present embodiment can be charged and discharged more efficiently than ever. Note that the contact interface between the negative electrode layer 12B and the solid electrolytic layer 13 has been described in FIG. 3. This can also be similarly conceivable for the contact interface between the positive electrode layer 12A and the solid electrolytic layer 13.

That is, in the present embodiment, the contact interface between the electrode layer and the solid electrolytic layer can be configured so that the void between those members contains the electrolytic solution. This configuration can also be applied to either the negative electrode layer side or the positive electrode layer side, or can also be applied to both the electrode layers. In addition, this configuration is preferably applied to at least the negative electrode layer side.

### [Raw Materials of Electrode Material]

Next, raw materials of the electrode material used in the present embodiment will be described below. As the raw materials, for example, the electrode active material is an essential component, and a conductive aid, a binder, a solid electrolyte and the like can be further used.

As the electrode active material described herein, a positive electrode active material is used for forming the positive electrode while a negative electrode active material is used for forming the negative electrode, and publicly-known materials can be used for these materials without any particular limitation. Note that the present embodiment is preferably used for improving the contact state on the positive electrode layer side.

### (Positive Electrode Active Material)

Examples of the positive electrode active material used herein are MnO₂, LiCoO₂, LiMn₂O₄, LiNiO₂ and the like. Further, preferable examples are a conversion-type (also referred to as decomposition/synthesis reaction-type) or alloy reaction-type active material. Preferable examples of this positive electrode active material are CuCl₂, FeF₂, S, AgCl, FeCl₃, NiCl₂, CoCl₂, FeCl₂, Li₂S, LiCl, LiF, AgF, Br₂, LiBr, CoF₃, CuF₂, CuF, BiF₃, CuCl₂, NiF₂, LiI, I₂, CoF₂, FeF₃, MnF₃, CrF₃, CuS, Li₂Se, Se, CuSe, Cu₂O , CoS₂, Cu₂S, NiS, FeS₂, Te, Li₂Te, VF₃, FeS, CoSe₂, MnS₂, MnCl₂, Co₃S₄, FeSe, TiF₃, MnS and the like. Among them, CuCl₂, FeF₂, and S are preferable.

Note that, for example, transition metal halides (CuCl₂, FeF₂, FeCl₃ and the like) and alkali metal halides (LiCl, LiF and the like) are appropriate to the conversion-type active material, and the charging/discharging is performed by a chemical reaction including decomposition/synthesis caused between lithium and a metal compound. On the other hand, for example, Si, SiO, Sn, SnCl₂ and the like are appropriate to the alloy reaction-type active material, and the charging/discharging is performed by a reaction including formation of an Li alloy phase.

Such a positive electrode active material is contained as particles, and an average particle diameter (D50) based on a laser diffraction/light scattering method therefore is preferably about 0.1 µm to 20 µm, more preferably about 0.4 µm to 10 µm.

### (Negative Electrode Active Material)

In addition, examples of the negative electrode active material used herein are Zn, Li, graphite, Li₄Ti₅O₁₂ and the like, and besides, are conversion-type or alloy reaction-type and dissolution/precipitation reaction-type active materials such as Si-, Li-, Sn-, Mg-, and Al-based materials. Among them, the Si-, Li-, Mg-, and Al-based active materials are preferable in terms of a high energy density per weight or per volume.

Note that, for example, metallic LI, metallic Na and the like are appropriate to the dissolution/precipitation reaction-type active material, and the charging/discharging is performed by the dissolution/precipitation of these metallic phases.

Examples of the Si-based negative electrode active material are Si, a mixture of Si and SiO₂ in which a composition ratio of Si and O is expressed as "1 : a (where 0.05 < a < 1.95)", a mixture of Si and SiC in which a composition ratio of Si and C is expressed as "1 : b (where 0 < b < 1)", a mixture of Si and Si₃N₄ in which a composition ratio of Si and N is expressed as "1 : c (where 0 < c < 4/3)" and the like.

In addition, other examples of the Si-based negative electrode active material are alloy materials made of Si and an element other than Si. Examples of the element other than Si described herein are Fe, Co, Sb, Bi, Pb, Ni, Cu, Zn, Ge, In, Sn, Ti and the like.

Examples of the Sn-based negative electrode active material are Sn, a Sn oxide, a Sn nitride, a Sn-containing alloy and the like, and solid solutions of these and the like. Some of Sn atoms contained in such a material may be substituted with one, two or more types of elements other than Sn.

Examples of the Sn oxide are tin oxide (SnO_{d} (0 < d < 2)), tin dioxide (SnO₂) and the like. Examples of the Sn-containing alloy are a Ni-Sn alloy, a Mg-Sn alloy, a Fe-Sn alloy, a Cu-Sn alloy, a Ti-Sn alloy and the like. Examples of the Sn compound are SnSiO₃, Ni₂Sn₄, Mg₂Sn and the like.

Examples of the Li-based negative electrode active material are Li, an In-Li alloy, an Al-Li alloy, a Mg-Li alloy, a Zn-Li alloy, a Sn-Li alloy, an Sb-Li alloy and the like.

Examples of the Mg-based negative electrode active material are Mg, a Ni-Mg alloy, a Sn-Mg alloy, a Fe-Mg alloy, a Cu-Mg alloy, a Ti-Mg alloy and the like.

Examples of the Al-based negative electrode active material are Al, a Ni-Al alloy, a Sn-Al alloy, a Fe-Al alloy, a Cu-Al alloy, a Ti-Al alloy and the like.

Such a negative electrode active material is contained as particles, and an average particle diameter (D50) based on a laser diffraction/light scattering method therefore is preferably about 1 µm to 20 µm, more preferably about 2 µm to 10 µm.

### (Conductive Aid)

Preferable examples of the conductive aid used herein are a carbon black such as acetylene black and other carbon materials (graphite, a carbon nanotube and the like).

### (Binder)

Preferable examples of the binder used herein are a fluorine-based binder such as polyvinylidene fluoride (PVDF) and polytetrafluoroethylene (PTFE) and rubber-based binders such as styrene-butadiene rubber (SBR).

### (Solid Electrolyte)

In addition, examples of the solid electrolyte used herein are various oxide-based solid electrolytes and sulfide-based solid electrolytes.

Preferable examples of the oxide-based solid electrolyte are a crystalline oxide having a NASICON-type structure, a garnet-type structure, or a perovskite-type structure and the like. Such a material is expressed by, for example, a general formula "LiₓAO_{y}" (where the term "A" is B, C, Al, Si, P, S, Ti, Zr, Nb, Mo, Ta or W, and the terms "x" and "y" are positive numbers). Specific examples thereof are Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄ and the like. In addition, preferable examples thereof are glasses or glass ceramics made of Li₂O-B₂O₃-P₂O₅-, Li₂O-SiO₂-, Li₂O-B₂O₃-, and Li₂O-B₂O₃-ZnO-based material or the like, not having a specific crystal structure.

From the viewpoint of having high ionic conductivity, it is particularly preferable to use the sulfide-based solid electrolyte. Examples thereof are glasses or glass ceramics made of Li₂S-SiS₂-, Li₂S-P₂S₃-, Li₂S-P₂S₅-, Li₂S-GeS₂-, Li₂S-B₂S₃-, Li₃PO₄-P₂S₅-, and Li₄SiO₄-Li₂S-SiS₂-based material or the like.

From the viewpoint of achieving higher ionic conductivity, it is preferable to use a Li₂S-based solid solution made of Li₂S and a lithium halide (such as LiCl, LiBr, LiI). Preferable examples thereof are LiBr-Li₂S-P₂S₅, LiI-Li₂S-P₂S₅, LiBr-LiI-Li₂S-P₂S₅ and the like.

Such a solid electrolyte is used as the particle form, and an average particle diameter (D50) thereof based on a laser diffraction/light scattering method therefore is, for example, preferably 0.1 µm to 10 µm, more preferably 0.4 µm to 5 µm.

### (Content Ratio of Raw Materials)

If the electrode layer is formed to contain the electrode active material, the conductive aid, the binder, and the solid electrolyte, when it is assumed that respective content ratios on mass basis regarding these materials are expressed as "electrode active material : conductive aid : binder : solid electrolyte = x : y : z : v", the content ratios (mass %) of these materials are respectively preferably in ranges of "50 ≦ x ≦ 92.5", "2.5 ≦ y ≦ 45", "2.5 ≦ z ≦ 45", and "2.5 ≦ v ≦ 45". Further, the ratios of these materials are respectively more preferably in ranges of "65 ≦ x ≦ 92.5", "2.5 ≦ y ≦ 20", "2.5 ≦ z ≦ 15", and "2.5 ≦ v ≦ 20".

### [Method of Manufacturing All-Solid-State Battery]

A method of manufacturing the all-solid-state battery according to one embodiment of the present invention is a method of manufacturing the all-solid-state battery including the current collector, the electrode layer, and the solid electrolytic layer as described above, and includes a step of immersing the electrode plate into the electrolytic solution and a step of stacking the electrode plate immersed into the electrolytic solution with the plate-like solid electrolyte and the current collector. Each of the steps will be described in detail below.

### [Immersion Step (S1)]

In the present embodiment, among the members configuring the all-solid-state battery, the electrode plate is immersed into the electrolytic solution before being stacked with the other members (an immersion step (S1)).

The electrode plate to be immersed into the electrolytic solution described herein may be an electrode plate for either a positive electrode layer or a negative electrode layer, and at least one of them may be immersed. At this time, at least the electrode plate for the negative electrode layer is preferably immersed, or the electrode plates for forming both the electrode layers may be together immersed into the electrolytic solution. The electrolytic solution used herein is the same as the electrolytic solution described in the above description for the all-solid-state battery.

By such immersion into the electrolytic solution, the electrolytic solution is infiltrated into the surface and the internal voids of the immersed electrode plate, and therefore, the electrolytic solution can be held in the electrode plate. By such holding of the electrolytic solution, the electrolytic solution can be exuded to a void formed at a contact interface between the solid electrolytic layer 13 and the electrode layer 12 when the electrode plate is stacked with the plate-like solid electrolyte described below.

If the electrode plate for forming the negative electrode layer is made of a material not containing lithium, note that this electrode plate can also be pre-doped. This can be pre-doped by immersing the electrode plate to which a lithium metal is attached into the electrolytic solution.

### [Stacking Step (S2)]

Then, a step of stacking the electrode plate for the electrode layer obtained in the above-described immersion step (S1) with the other members (the current collector, the plate-like solid electrolyte and the like) configuring the all-solid-state battery is performed (a stacking step (S2)). At this time, the members may be stacked to have a stacked structure of the all-solid-state battery 10 illustrated in FIG. 1, that is, in an order of the positive electrode current collector 11A, the positive electrode layer 12A, the solid electrolytic layer 13, the negative electrode layer 12B, and the negative electrode current collector 11B. Examples of a material for each of the members used herein are the materials described in the above configuration of the all-solid-state battery.

By these steps, the all-solid-state battery according to the present embodiment illustrated in FIGs. 1 and 2 can be manufactured. At this time, for example, when the electrode plate for the negative electrode layer is subjected to the immersion step (S1), the electrolytic solution contained and held in the electrode plate for the negative electrode layer exudes to a plurality of very small voids formed at the contact interface between the negative electrode layer 12B and the solid electrolyte layer 13 as illustrated in FIG. 2, thereby causing a state where the voids contain the electrolytic solution 21. These voids are preferably filled with the electrolytic solution.

As described above, the all-solid-state battery and the method of manufacturing the all-solid-state battery in the present embodiment can improve the contact state between the electrode layer and the solid electrolytic layer, thereby providing the all-solid-state battery that achieves the efficient charging/discharging. In addition, the improvement in the contact states between both electrode layers and the solid electrolytic layer achieves the charging/discharging without the pressurization or the like, and therefore, the all-solid-state battery that achieves the charging/discharging by the simple configuration and operation can be provided.

### [Examples]

The present embodiment will be described below in further detail with reference to examples.

### (Working Example 1)

An electrode plate for a negative electrode layer and a substrate made of stainless steel serving as the negative electrode current collector were prepared, the electrode plate being made of graphite of 49.91 mass% serving as the negative electrode active material, lithium lanthanum zirconate (LLZ) of 40.06 mass% serving as the solid electrolyte, and polyamideimide of 10.03 mass% serving as the binder.

In addition, a stacked body made of an electrode plate for a positive electrode layer on a substrate made of stainless steel serving as the positive electrode current collector was prepared, the electrode plate being made of copper chloride (CuCl₂) of 65.02 mass% serving as the positive electrode active material, Li₂O-Al₂O₃-SiO₂-P₂O₅-TiO₂-based solid electrolyte (Product Name: LICGC-PW01 produced by OHARA INC.,) of 12.50 mass% serving as the solid electrolyte, acetylene black of 12.51 mass% serving as the conductive aid, and polyamideimide of 9.97 mass% serving as the binder.

Further, as the solid electrolytic layer, a plate-like Li₂O-Al₂O₃-SiO₂-P₂O₅-TiO₂-based solid electrolyte (Product Name: LICGC-AG01 produced by OHARA INC.; Thickness: 0.150 mm) was prepared.

Then, lithium metal was attached to the electrode plate for the negative electrode layer, and the electrode plate was immersed in the electrolytic solution and left to stand overnight to be pre-doped. The electrolytic solution used herein was prepared by dissolving the electrolyte to have a concentration of 1M. A mixed solvent made of ethylene carbonate (EC) and dimethyl carbonate (DMC) [EC: DMC (1 : 1 v/v%)] was used as the solvent, and lithium hexafluorophosphate (LiPF₆) was used as the electrolyte.

The members prepared as described above were stacked to provide the configuration illustrated in FIG. 1, to manufacture the all-solid-state battery 1.

### (Comparative Example 1)

This example is different from the Working Example 1 except that the pre-doping for immersing the electrode plate for the negative electrode layer into the electrolytic solution was not performed, and an all-solid-state battery C1 was manufactured by the same operation in other steps.

### (Examination Example)

Respective charging/discharging characteristics of the all-solid-state battery 1 obtained in the Working Example 1 and the all-solid-state battery C1 obtained in the Comparative Example 1 were examined.

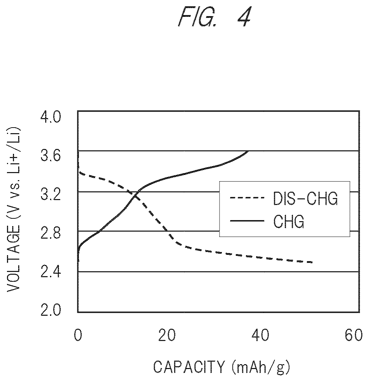

The charging/discharging characteristics were examined under conditions of a charging/discharging mode: CC, an ambient temperature: 50°C, a cutoff voltage: 3.6 to 2.4 V, and a charging/discharging rate: 0.01 C without the pressurization on the all-solid-state battery. FIG. 4 illustrates a charging/discharging result in the Working Example 1 obtained in this examination.

According to FIG. 4, it has been confirmed that the all-solid-state battery 1 can be charged/discharged. On the other hand, it has been confirmed that the all-solid-state battery C1 cannot be charged/discharged under the conditions without the pressurization.

This result reveals that the all-solid-state battery according to the present embodiment can achieve its function even without being charged/discharged under the pressurization as in the related art, and can exhibit the charging/discharging characteristics even in the simple configuration.

In the foregoing, the present invention has been concretely described based on the embodiments. However, it is needless to say that the present invention is not limited to the foregoing embodiments, and various modifications can be made within the scope of the present invention.

### EXPLANATION OF REFERENCE CHARACTERS

10 all-solid-state battery
11 current collector
11A positive electrode current collector
11B negative electrode current collector
12 electrode layer
12A positive electrode layer
12B negative electrode layer
13 solid electrolytic layer
21 electrolytic solution
51 void

## Claims

1. An all-solid-state battery comprising:
a current collector;
an electrode layer provided on the current collector; and
a solid electrolytic layer stacked on and being in contact with the electrode layer,
wherein a plurality of voids are formed at a contact interface between the electrode layer and the solid electrolytic layer, and
the voids contain electrolytic solution.

2. The all-solid-state battery according to claim 1,
wherein the contact interface containing the electrolytic solution includes at least a contact interface between a negative electrode layer and the solid electrolytic layer.

3. The all-solid-state battery according to claim 1,
wherein the electrolytic solution contains at least one type of electrolyte selected from lithium hexafluorophosphate (LiPF₆), lithium tetrafluoroborate (LiBF₄), lithium perchlorate (LiClO₄), lithium trifluoromethanesulfonate (LiTFS), lithium bis(trifluoromethanesulfonyl)imide (LiTFSI), lithium bis(fluorosulfonyl)imide (LiFSI), lithium bis(perfluoroethylsulfonyl)imide (LiBETI), lithium bis(oxalate) borate (LiBOB), lithium tris(pentafluoroethyl)trifluorophosphate (LiFAP) and LiC(SO₂CF₃)₃ in a solvent containing any one of ethylene carbonate, diethyl carbonate, dimethyl carbonate, ethyl methyl carbonate and propylene carbonate.

4. The all-solid-state battery according to claim 1,
wherein the electrode layer contains, as its raw materials, an electrode active material, a conductive aid, a binder and a solid electrolyte, and,
when it is assumed that respective content ratios on mass basis regarding the electrode active material, the conductive aid, the binder and the solid electrolyte are expressed as "electrode active material : conductive aid : binder : solid electrolyte = x : y : z : v", the content ratios (mass%) of these materials are in ranges of "50 ≦ x ≦ 92.5", "2.5 ≦ y ≦ 45", "2.5 ≦ z ≦ 45", and "2.5 ≦ v ≦ 45".

5. A method of manufacturing an all-solid-state battery, comprising:
a step of immersing an electrode plate into electrolytic solution; and
a step of stacking the electrode plate immersed in the electrolytic solution with a plate-like solid electrolyte and a current collector.

6. The method of manufacturing the all-solid-state battery according to claim 5,
wherein, in the all-solid-state battery, a plurality of voids are formed at a contact interface between the electrode plate and the plate-like solid electrolyte, and
the voids contain the electrolytic solution.

7. The method of manufacturing the all-solid-state battery according to claim 5,
wherein the electrode plate formed by being immersed into the electrolytic solution includes a negative electrode plate.

8. The method of manufacturing the all-solid-state battery according to claim 5,
wherein the electrolytic solution contains at least one type of electrolyte selected from lithium hexafluorophosphate (LiPF₆), lithium tetrafluoroborate (LiBF₄), lithium perchlorate (LiClO₄), lithium trifluoromethanesulfonate (LiTFS), lithium bis(trifluoromethanesulfonyl)imide (LiTFSI), lithium bis(fluorosulfonyl)imide (LiFSI), lithium bis(perfluoroethylsulfonyl)imide (LiBETI), lithium bis(oxalate) borate (LiBOB), lithium tris(pentafluoroethyl)trifluorophosphate (LiFAP) and LiC(SO₂CF₃)₃ in a solvent containing any one of ethylene carbonate, diethyl carbonate, dimethyl carbonate, ethyl methyl carbonate and propylene carbonate.

9. The method of manufacturing the all-solid-state battery according to claim 5,
wherein the electrode layer contains, as its raw materials, an electrode active material, a conductive aid, a binder and a solid electrolyte, and,
when it is assumed that respective content ratios on mass basis regarding the electrode active material, the conductive aid, the binder and the solid electrolyte are expressed as "electrode active material : conductive aid : binder : solid electrolyte = x : y : z : v", the content ratios (mass%) of these materials are in ranges of "50 ≦ x ≦ 92.5", "2.5 ≦ y ≦ 45", "2.5 ≦ z ≦ 45", and "2.5 ≦ v ≦ 45".
